Europäisches Patentamt

European Patent Office

Office européen des brevets

(11) Publication number: **0 428 735 A1**

# EUROPEAN PATENT APPLICATION
## published in accordance with Art. 158(3) EPC

(21) Application number: 90906350.5

(22) Date of filing: 24.04.90

(86) International application number:
PCT/JP90/00533

(87) International publication number:
WO 90/14620 (29.11.90 90/27)

(51) Int. Cl.⁵: **G05B 19/05**

(30) Priority: 25.05.89 JP 132378/89

(43) Date of publication of application:
29.05.91 Bulletin 91/22

(84) Designated Contracting States:
**DE FR GB**

(71) Applicant: **FANUC LTD.**
**3580, Shibokusa Aza-Komamba Oshino-mura**
**Minamitsuru-gun, Yamanashi 401-05(JP)**

(72) Inventor: **KAWAMURA, Hideaki**
**1375-5, Naraharamachi**
**Hachioji-shi Tokyo 193(JP)**
Inventor: **MAEDA, Kimio**
**52-2-103, Matsugaya Hachioji-shi**
**Tokyo 192-03(JP)**

(74) Representative: **Brunner, Michael John et al**
**GILL JENNINGS & EVERY 53-64 Chancery**
**Lane**
**London WC2A 1HN(GB)**

(54) **SYSTEM FOR DISPLAYING DATA ON A SCREEN.**

(57) A system for displaying data on a screen to prepare screen data of a controller such as PC (programable controller), CNC (numerical controller), etc. Using a pop-up menu and the like, screen data are prepared in intermediate codes (S1). A C-language source file is prepared (S2) using the screen data of the intermediate codes, and is compiled to prepare an executable program (S3). The executable program is stored in the controller to make screen display. The screen is prepared by a specially designed screen editor for a personal computer within a short period of time with high reliability even by an unexperienced programmer without requiring any particular knowledge related to program language.

# SCREEN DATA DISPLAY SYSTEM

## Technical Field

This invention relates to a screen data display system for displaying screen data of a control device such as a PC (programmable controller), and more particularly, to a screen data display system in which screen data is prepared by a special screen creating editor of a personal computer or the like and is displayed as screen data for another control device.

## Background Art

In control devices such as a PC (programmable controller), special languages used exclusively therefor are used to create screen data to be displayed on a screen, and since the system for these control devices is designed inherently to control a machine tool or the like, generally utilities for creating a screen data program and the like are not furnished.

Therefore, to prepare screen data, the programmer is required to have both a knowledge of the programming language of the control device such as a PC and a knowledge of the display rule of each display unit. Accordingly, the time spent in preparing the screen data, and the reliability of the created software, largely depend on the technical level of the programmer, thus posing a problem in the development of software.

## Disclosure of the Invention

This invention has been made in view of the above circumstances, and an object thereof is to provide a screen data display system wherein screen data is prepared by a special screen creating editor of a personal computer or the like and is displayed as screen data for another control device.

According to this invention, to achieve the above object, there is provided a screen data display system for creating screen data for a control device such as a PC (programmable controller) and CNC (numerical control device), wherein screen data including at least one of a fixed display information, dynamic display data, and cursor moving information is created by using a screen creating editor of a device such as a personal computer, and the screen data is displayed at the control device.

Since the screen data is created by a screen editor of a personal computer or the like, reliable screen data can be produced in a short time by even an inexperienced programmer having no special knowledge of the programming language.

Usually, the screen data is created by using intermediate codes, which are first converted into a general language and then converted into a special language used exclusively for the control device such as the PC (programmable controller), to display the screen data for the control device.

## Brief Description of the Drawings

Fig. 1 is a flowchart of a screen data creating process according to this invention; and
Fig. 2 is a partial block diagram of a numerical control device for carrying out this invention.

## Best Mode of Carrying Out the Invention

One embodiment of this invention will be described with reference to the accompanying drawings.

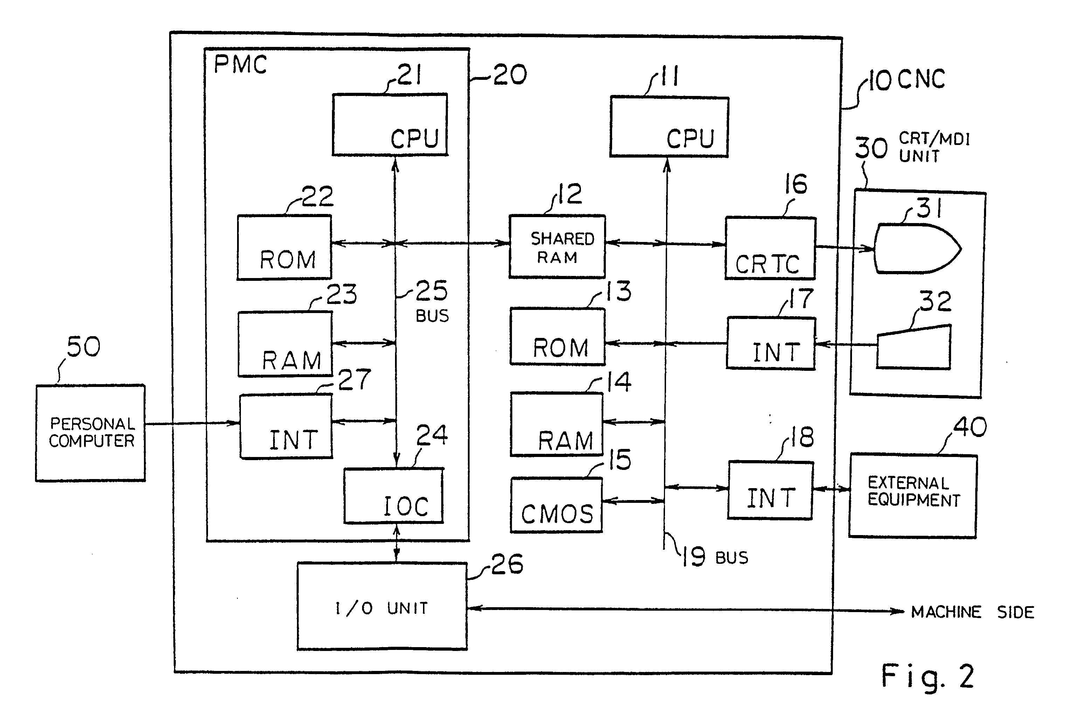

Figure 2 is a partial block diagram of a numerical control device for carrying out this invention. A PMC (programmable machine controller) 20, which is a kind of PC (programmable controller), is built in the numerical control device (CNC) 10. A processor (CPU) 11 acts as a center for the global control of the numerical control device (CNC) 10, and reads out a system program stored in a ROM 13 via a bus 19, to control the entire numerical control device (CNC) 10 in accordance with the system program. A shared RAM 12 permits a transfer of data between the CNC 10 and the PMC 20, and stores data simultaneously accessible from both the CNC and the PMC.

Display data or other temporary calculation data, etc., is stored in a RAM 14. Tool correction values, pitch error correction values, machining program, parameters and the like are stored in a CMOS 15, which is a nonvolatile memory. The CMOS 15 is backed up by a battery, not shown, and thus the data stored therein can be retained even if the power supply to the numerical control device (CNC) 10 is cut off. The CMOS 15 also stores parameters or the like required by the PMC 20.

A graphic control circuit (CRTC) 16 converts digital data, such as the current position of each axis, alarm, parameters, image data, etc., into an image signal, and outputs that signal. The image signal is supplied to a display 31 of a CRT/MDI unit 30, to be displayed thereat. An interface (INT) 17 receives data from a keyboard 32 of the CRT/MDI unit 30 and supplies the same to the processor (CPU) 11.

Screen data to be displayed at the display 31 is created by using an editor of a personal computer 50 described later, converted into an execution program or data in the language for the PMC 20, and then stored in a RAM 23.

An interface (INT) 18 for external equipment is connected to external equipment 40 such as a paper tape reader, paper tape puncher, paper tape reader/puncher, and printer. A machining program, read from the paper tape reader or edited by the numerical control device (CNC) 10, can be output to the paper tape puncher.

The processor (CPU) 11 and elements such as the shared RAM 12 and ROM 13 are interconnected via a bus 19.

In Fig. 2, an axis control circuit for controlling the servomotor, etc., servo amplifier, spindle control circuit, spindle amplifier, manual pulse generator interface and the like are omitted.

The PMC (programmable machine controller) 20 is also provided with a processor (CPU) 21. The processor (CPU) 21 is connected to the shared RAM 12 via a bus 25, and the shared RAM 12 is connected to the bus 19 of the CNC 10.

Further, a ROM 22 is connected to the bus 25. The ROM 22 stores a monitor program for controlling the PMC 20, and an edited sequence program.

The bus 25 is also connected to the RAM 23, to which screen data from the personal computer 50 is transferred via the interface (INT) 27.

An I/O control circuit (IOC) 24 is connected to the bus 25 and converts an output signal stored in the RAM 23 into a serial signal and supplies same to an I/O unit 26. The circuit 24 also converts a serial input signal from the I/O unit 26 into a parallel signal, and sends same to the bus 25. This signal is stored in the RAM 23 by the processor (CPU) 21.

The processor (CPU) 21 receives command signals, such as an M function command and T function command, from the CNC 10 via the shared RAM 12, temporarily stores the same in the RAM 23, processes the command in accordance with the sequence program stored in the ROM 22, and outputs the result to the I/O unit 26 via the I/O control circuit (IOC) 24. This output signal is used to control a hydraulic device, pneumatic device, and electromagnetic device on the machine side.

Further, the processor (CPU) 21 receives an input signal, such as a limit switch signal and operation switching signal of a machine operator panel from the machine side, and stores the input signal in the RAM 23. Input signals that need not be processed by the PMC 20 are supplied to the processor 11 via the RAM 12. Other input signals are processed in accordance with the sequence program, and one part thereof output to the CNC side and the other part output from the I/O unit 26 to the machine side, via the I/O control circuit (IOC) 24, as an output signal.

The display data stored in the RAM 23 is displayed at the display 31, and at the same time, a cursor control, etc., can be carried out through the keyboard 32. This screen data includes fixed information from the PMC 20, or dynamically variable dynamic information. For example, the dynamic information includes an input signal received by the PMC 20 from the machine side.

Further, the screen data can be supplied via the bus 19 to the printer 40 connected to the interface 18, to be printed out by the printer 40.

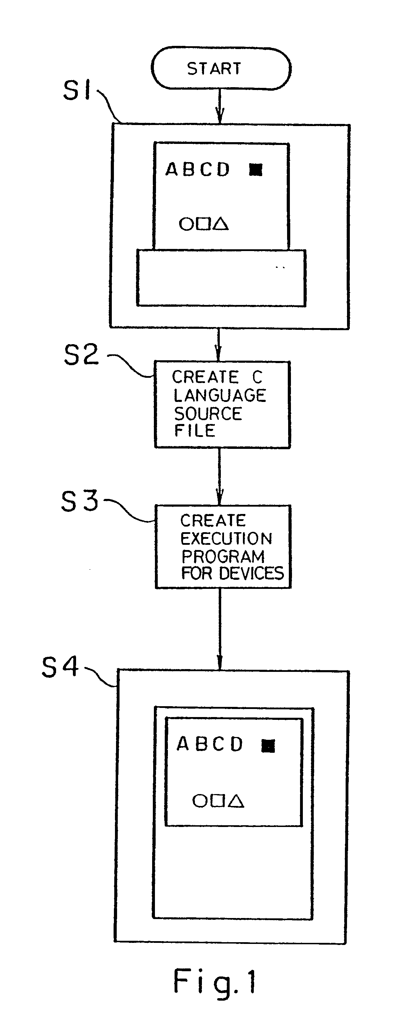

Figure 1 is a flowchart of the screen data creating process according to this invention.

[S1] Screen data is directly created and edited, by using a pop-up menu, cursor key, soft key, mouse, and the like, by the exclusive editor of the personal computer. The screen data is created by using an intermediate code, such as an ASCII code.

[S2] The screen data created by using the intermediate code is converted to create a C language source file. This conversion is usually effected by the personal computer.

[S3] The screen display program as the C language source file is compiled and is linked with a user program, to create an execution program.

[S4] The execution program is stored in a target device (PMC) and the screen data is displayed. The screen display data includes fixed information data, dynamic display data, cursor moving data, and the like.

The above description is directed to the screen display data from the PMC contained in the numerical control device, but it is possible to create screen display data for the display unit of an independent numerical control device or PC.

As described above, according to this invention, the screen data is created by an exclusive screen editor of a personal computer, etc., and converted to an execution program for the control device such as a PC, to effect the screen display. Accordingly, the screen data can be easily created without any knowledge of the programming language for the display unit of the control device such as a PC, or knowledge of the control structure thereof.

**Claims**

1. A screen data display system for creating screen data for a control device such as a PC (programmable controller) and CNC (numerical control device), wherein screen data including at least one of fixed display information, dynamic display data, and cursor moving information is created by using a screen creating editor of a device such as a personal computer, and the screen data is displayed at the control device.

2. A screen data display system according to claim 1, wherein the screen data is converted into a source file of general language, and the source file is compiled and linked with a user program and displayed at a screen of the control device.

3. A screen data display system according to claim 1, wherein the general language comprises a C language or machine language.

4. A screen data display system according to claim 1, wherein the screen data includes at least one of fixed display information, dynamic display data, and cursor moving information.

Fig.1

5

Fig. 2

EP 0 428 735 A1

# INTERNATIONAL SEARCH REPORT

International Application No　PCT/JP90/00533

| ·I. CLASSIFICATION OF SUBJECT MATTER (if several classification symbols apply, indicate all) [6] |
|---|
| According to International Patent Classification (IPC) or to both National Classification and IPC |

Int. Cl$^5$　　G05B19/05

## II. FIELDS SEARCHED

| Minimum Documentation Searched [7] |
|---|

| Classification System | Classification Symbols |
|---|---|
| IPC | G05B19/05 |

| Documentation Searched other than Minimum Documentation<br>to the Extent that such Documents are Included In the Fields Searched [8] |
|---|

| Jitsuyo Shinan Koho | 1932 – 1990 |
|---|---|
| Kokai Jitsuyo Shinan Koho | 1971 – 1990 |

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| Y | JP, A, 62-15604 (Mitsubishi Electric Corp.), 24 January 1987 (24. 01. 87), (Family: none) | 1 – 4 |
| Y | JP, U, 60-135905 (Omron Tateisi Electronics Co.), 10 September 1985 (10. 09. 85), (Family: none) | 1 – 4 |
| Y | JP, A, 61-147304 (Hitachi Seiki Co., Ltd.), 5 July 1986 (05. 07. 86), (Family: none) | 1 – 4 |
| Y | JP, A, 63-204405 (Omron Tateisi Electronics Co.), 24 August 1988 (24. 08. 88), (Family: none) | 1 – 4 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| July 23, 1990 (23. 07. 90) | August 6, 1990 (06. 08. 90) |
| International Searching Authority | Signature of Authorized Officer |
| Japanese Patent Office | |

Form PCT/ISA/210 (second sheet) (January 1985)